# EUROPÄISCHE PATENTANMELDUNG

(11) **EP 1 783 478 A2**
(43) Veröffentlichungstag der Anmeldung: **09.05.2007**
(21) Anmeldenummer: 06023205.5
(22) Anmeldetag: 08.11.2006
(51) Int. Cl.: G01N 1/08

(54) **Anlage zur Handhabung von Abfallstoffen mit einer Vorrichtung zur Entnahme von Proben**

(30) Priorität: 08.11.2005 DE 102005053523
(71) Anmelder: Müller, Matthias, 59320 Enniger (DE)
(72) Erfinder: Müller, Matthias, 59320 Enniger (DE)
(74) Vertreter: Ostriga, Sonnet, Wirths & Roche

(57) **Zusammenfassung**

Beschrieben und dargestellt ist u.a. eine Anlage (10) zur Beförderung und/oder Trennung und/oder Sortierung von Abfallstoffen (16), wie Hausabfällen, mit einer Vielzahl von Fördereinrichtungen (12, 13), insbesondere Förderbändern, wobei wenigstens eine erste, obere Fördereinrichtung (12) den Abfallstoff als fallenden Materialstrom (18) an eine zweite, untere und zu der ersten Fördereinrichtung (12) überlappend angeordnete Fördereinrichtung (13) übergibt.

Die Besonderheit besteht u.a. darin, dass unterhalb der oberen Fördereinrichtung eine Vorrichtung (11) zur Entnahme einer Stichprobe des Abfallstoffes aus dem Materialstrom (18) angeordnet ist, die eine Probenaufnahme (20) aufweist, die zwischen einer in den Materialstrom eintauchenden Arbeitsposition (Fig. 6) und einer unterhalb der oberen Fördereinrichtung befindlichen Ruheposition (Fig. 7) verlagerbar ist, wobei unterhalb der oberen Fördereinrichtung ein Abstreiferelement (21) vorgesehen ist, das in Folge einer Verlagerung der Probenaufnahme aus der Arbeits- in die Ruheposition die Abfallprobe von der Oberseite (34) der Probenaufnahme (20) abstreift und einem unterhalb des Abstreiferelementes (21) befindlichen Abfallproben-Archivierungsbehältnis (30) zuführt.

## Beschreibung

Die Erfindung betrifft zunächst eine Anlage zur Beförderung und/oder Trennung und/oder Sortierung von Abfallstoffen gemäß dem Oberbegriff des Anspruches 1.

Insbesondere betrifft die Erfindung eine Sortieranlage für Hausabfälle, die üblicherweise in den Haushalten in so genannten Restmüllbehältnissen gesammelt werden und insoweit nicht vorsortiert sind. Die Hausabfälle werden in großen Abfallsortieranlagen angeliefert, die man sich als große Hallen vorstellen muss, in denen kilometerlange Förderbänder verlaufen, um die Abfälle zu unterschiedlichen Orten innerhalb der Abfallsortieranlage zu transportieren. Dabei wird durch verschiedene Einrichtungen der Abfall getrennt, sortiert und unterschiedlichen Sammelplätzen, gegebenenfalls zur Weiterbearbeitung oder zum Abtransport zugeführt.

Die vorliegend zu betrachtenden Abfälle sind ausgesprochen heterogener Art. Es handelt sich teilweise um organische Materialien, aber auch gemischt mit Kunststoff- und Metallabfällen. In den Abfällen können sich auch Drähte, Kabel, Seile od. dgl. befinden.

Die Abfälle werden in der Anlage typischerweise über endlos umlaufende Förderbänder transportiert, die im Wesentlichen gekapselt, das heißt allseitig umschlossen, sind. Die Kapselung dient unter anderem der Verringerung von Staubbelastungen in der Hallenluft. Die Verkleidungen, Abdeckungen oder Kapselungen sind oft nur an den Stellen unterbrochen, an denen die Förderbänder beginnen oder enden. Dies sind entweder Orte, an denen der Abfall einer weiteren Bearbeitung zugeführt wird, beispielsweise einem Metalldetektor, oder es sind Orte, an denen die Abfälle von einem Förderband an ein anderes Förderband übergeben werden. Diese Übergabe erfordert typischerweise fallend, das heißt, dass ein oberes Förderband in überlappender Anordnung zu einem unteren Förderband vorgesehen ist. In dem Bereich dieser Überlappung fällt der Abfall in einem Materialstrom aufgrund der Schwerkraft hinab.

Die Erfindung befasst sich mit der Problematik einer ständigen bzw. regelmäßigen Überprüfung der Qualität bzw. Beschaffenheit der in der Sortier- bzw. Beförderungsanlage bearbeiteten Abfälle.

Üblicherweise werden regelmäßige Probenentnahmen manuell mit Handschaufeln aus dem fließenden Förderstrom vorgenommen. Dies wird allerdings als nicht mehr zeitgemäß angesehen, zumal der Probenentnahmevorgang äußerst mühselig und im Hinblick auf die in der Halle bestehenden Gesundheitsrisiken der Mitarbeiter ein Arbeiten unter Vollschutz, das heißt mit besonderer Schutzkleidung und Sauerstoffflasche, erfordert.

Aus der DE 44 36 422 C1 ist eine Anlage zur Selektierung von wertstoffhaltigen Abfallprodukten bekannt, bei der eine Einrichtung vorgesehen ist, mit der Materialproben entnommen werden können. Dort ist ein Stanzwerkzeug vorgeschlagen, mit dem aus dem Abfallprodukt eine schlüssellochartige Materialprobe ausgestanzt werden kann. Das Abfallmaterial kann nach Bestimmung der Beschaffenheit der Abfallprobe mit einer entsprechenden Kennung versehen werden und entsprechend weitergeleitet werden.

Eine gemäß der DE 44 36 422 C1 vorgeschlagene Probenentnahme bietet sich lediglich bei stanzfähigen Abfallstoffen an. Bei Hausabfällen ist die dort vorgeschlagene Probenentnahmevorrichtung nicht einsetzbar, beispielsweise weil in dem Hausabfall enthaltene Hindernisse den Betrieb der Stanzeinrichtung beeinträchtigen können. Außerdem kann die vorgeschlagene Stanzeinrichtung umgekehrt auch den bei Hausabfällen typischerweise zu erwartenden enormen Volumenstrom in den Fördereinrichtungen beeinträchtigen, so dass ein störungsfreier Betrieb der vorbekannten Anlage mit einer Stanzvorrichtung bei den hier zu betrachtenden Abfällen nicht gewährleistet ist.

Die Erfindung geht aus von einer gattungsgemäßen Anlage gemäß dem Oberbegriff des Anspruches 1, wie sie durch offenkundige, druckschriftlich nicht belegbare Vorbenutzung bekannt geworden ist. Bei der bekannt gewordenen Anlage wird ein schaufelradähnliches Werkzeug an die Oberseite des Förderbandes in einem nicht abgekapselten, frei zugänglichen Bereich der Fördereinrichtung angesetzt. Das bekannte Schaufelrad dient dazu, Stichproben aus dem mit dem Förderband transportierten Abfall zu entnehmen und diese Stichprobe zum Zwecke einer weiteren Untersuchung an einer anderen Stelle als der Entnahmestelle abzusetzen.

Die bekannt gewordene Anlage weist jedoch den gravierenden Nachteil auf, dass für den Fall, dass sperrige Hindernisse, wie Drähte, Kabel oder Seile, als Bestandteil der Abfallstoffe mit dem Förderband transportiert wurden, diese in die Bewegungsbahn des Schaufelrades eingreifen und die ordnungsgemäße Funktion des Schaufelrades beeinträchtigen können. Im dauerhaften Einsatz erwies sich daher die vorbekannte Vorrichtung als nicht geeignet.

Ausgehend von dieser vorbekannten Anlage liegt die Aufgabe der Erfindung darin, eine Anlage gemäß dem Oberbegriff des Anspruches 1 derartig weiterzubilden, dass bei kompakter Bauweise die Möglichkeit einer robusten Konstruktion, die Möglichkeit einer Probenentnahme über die gesamte Breite des Förderstromes und die Möglichkeit einer dauerhaft sicheren Probenentnahme besteht, die nur einen geringen Wartungsaufwand erfordert und die die Funktionsweise der Fördereinrichtung nicht beeinträchtigt.

Die Erfindung löst diese Aufgabe mit den Merkmalen des Anspruches 1, insbesondere mit denen des Kennzeichenteils, und ist demgemäß dadurch gekennzeichnet, dass unterhalb der oberen Fördereinrichtung eine Vorrichtung zur Entnahme einer Stichprobe des Abfallstoffes aus dem Materialstrom angeordnet ist, die eine Probenaufnahme aufweist, die zwischen einer in den Materialstrom eintauchenden Arbeitsposition und einer unterhalb der oberen Fördereinrichtung befindlichen Ruheposition verlagerbar ist, wobei unterhalb der oberen Fördereinrichtung ein Abstreiferelement vorgesehen ist, das in Folge einer Verlagerung der Probenaufnahme aus der Arbeits- in die Ruheposition die Abfallprobe von der Oberseite der Probenaufnahme abstreift und einem unterhalb des Abstreiferelementes befindlichen Abfallproben-Archivierungsbehältnis zuführt.

Das Prinzip der Erfindung besteht somit im Wesentlichen darin, eine besonders kompakte Vorrichtung zur Entnahme einer Stichprobe vorzusehen, die sich vollständig unterhalb der oberen Fördereinrichtung befindet. Blickt ein Betrachter, sozusagen in der Vogelperspektive, auf die obere Fördereinrichtung, so kann er die Konturen der Vorrichtung zur Entnahme einer Stichprobe des Abfallstoffes vorteilhafterweise nicht erkennen, da er die obere Fördereinrichtung die Vorrichtung zur Entnahme einer Stichprobe im Wesentlichen vollständig abdeckt. Die Vorrichtung ragt somit weder über die Breite der oberen Fördereinrichtung, das heißt quer zur Förderrichtung der oberen Fördereinrichtung, hinaus, noch ragt die Vorrichtung in den Materialstrom hinein.

Die Vorrichtung umfasst eine Probenaufnahme, die, vorzugsweise linear, zwischen einer Arbeitsposition und einer Ruheposition verlagerbar ist. Befindet sich die Probenaufnahme in ihrer Arbeitsposition, taucht sie in den Materialstrom ein und fängt fallendes Abfallmaterial auf. Die unmittelbar neben dem fallenden Materialstrom angeordnete Vorrichtung ermöglicht auf diese Weise eine Probenentnahme im Bereich einer Anlage zur Beförderung und/oder Trennung und/oder Sortierung von Abfallstoffen, ohne dass das vorhandene System von Fördereinrichtungen geändert oder angepasst werden muss. Die Vorrichtung wird vorteilhaft als Ergänzung an einer vorhandenen Übergabestelle installiert, an der der Materialstrom ohnehin frei fällt, das heißt typischerweise eine Kapselung oder Verkleidung nicht vorgesehen ist.

Die Probenaufnahme kann kurzzeitig, beispielsweise lediglich 0,2 Sekunden lang, in den Materialstrom eintauchen und anschließend sofort wieder zurückgezogen werden. Die Rückziehbewegung erfolgt bis in eine Ruheposition hinein, in der sich die Probenaufnahme vollständig unterhalb der oberen Fördereinrichtung befindet. In der Ruheposition kann die Probenaufnahme längere Zeit, beispielsweise einige Minuten, vorzugsweise 6 Minuten, verharren, bis durch Betätigung eines Antriebes eine schnelle Verlagerungsbewegung der Probenaufnahme in die Arbeitsposition und eine weitere Rückziehbewegung erfolgt.

Die Vorrichtung weist des Weiteren ein Abstreiferelement auf, welches ebenfalls unterhalb der oberen Fördereinrichtung angeordnet ist. Das Abstreiferelement kooperiert mit der Oberseite der Probenaufnahme und dient dazu, während und infolge einer Verlagerung der Probenaufnahme aus ihrer Arbeitsposition in ihre Ruheposition die entnommene, auf der Oberseite der Probenaufnahme befindliche Abfallprobe von der Probenaufnahme abzustreifen oder abzuschaben. Infolge der Verlagerung der Probenaufnahme aus ihrer Arbeitsposition in ihre Ruheposition bleibt die entnommene Abfall-Stichprobe an dem Abstreiferelement haften und kann, wenn die Probenaufnahme weit genug zurückgezogen ist und das Abstreiferelement nach unten freigibt, nach unten fallen oder rutschen. Unterhalb des Abstreiferelementes befindet sich ein Abfallproben-Archivierungsbehältnis, welches der aufeinanderfolgenden gesammelten Aufnahme vieler Abfall-Stichproben dient. Die einzelnen Stichproben können entweder direkt in das Archivierungsbehältnis hinabfallen oder über eine Rutsche dorthin transportiert werden.

Die Probenaufnahme selbst kann beispielsweise von einem flachen, plattenförmigen oder im Wesentlichen tablettartigen Element gebildet sein. Insbesondere kann sich die Probenaufnahme im Wesentlichen entlang der gesamten Breite der oberen Fördereinrichtung erstrecken. Dies ermöglicht eine Stichproben-Entnahme, wobei die Stichprobe vollständig repräsentativ für das von der Fördereinrichtung transportierte Abfallmaterial ist, da die Stichprobe entlang einer Breite entnommen wird, die der gesamten Breite des Abfalls entspricht.

Die Vorrichtung beeinträchtigt durch ihre Installation das vorhandene System von Fördereinrichtungen nicht. Die Vorrichtung ist kompakt und findet trotz der beengten Einbauverhältnisse in bestehenden Beförderungs- und/oder Trenn- und/oder Sortier-Anlagen von Abfallstoffen Platz. Damit ist auch ein nachträglicher Einbau in eine bestehende Abfallbeförderungsanlage möglich.

Durch Anordnung der Vorrichtung vollständig unterhalb der oberen Fördereinrichtung werden die seitlich der oberen Fördereinrichtung befindlichen, ohnehin engen Platzverhältnisse nicht weiter beansprucht. Passagen oder Wege entlang der oberen Fördereinrichtung können daher erhalten bleiben.

Die Vorrichtung ragt mit keinem Teil oder Element, ausgenommen die in Arbeitsposition befindliche Probenaufnahme, in den Materialstrom hinein. Der Materialstrom, der bei den hier zu betrachtenden Abfällen sehr voluminös und sehr massiv ist und von sehr heterogener Beschaffenheit ist, wird insoweit durch die Vorrichtung nicht beeinträchtigt.

Die Probenaufnahme taucht zyklisch jeweils nur sehr kurz in den Materialstrom hinein, wobei die Eintauchzeit beispielsweise im Bereich von 0,2 Sekunden liegen kann. Die Eintauchzeit und die aktive, das heißt wirksame Oberfläche der Probenaufnahme ist so bemessen, dass einerseits die zu entnehmende, gewünschte Menge an Stichprobenmaterial erreicht bzw. eingehalten wird und andererseits die in diesem Materialstrom typischerweise fließende Materialmenge berücksichtigt wird.

Die Probenaufnahme weist vorzugsweise einen Linearantrieb auf und ist demnach linear verlagerbar. Dies ermöglicht kürzeste Verlagerungszeiten der Probenaufnahme zwischen ihrer Arbeits- und ihrer Ruheposition. Außerdem kann bei einer linearen Verlagerungsbewegung entlang einer Verlagerungsrichtung, die parallel zu der Beförderungsrichtung der oberen Fördereinrichtung ausgerichtet ist, eine optimal-repräsentative Stichprobe des zu überprüfenden Abfallmaterials entnommen werden.

Die für den Antrieb der Probenaufnahme vorgesehenen Elemente und Teile und die Führungen bzw. Halterungen oder Aufhängungen für die Probenaufnahme sind ebenfalls unterhalb der oberen Fördereinrichtung und außerhalb des Materialstromes angeordnet. Damit wird eine von dem Materialstrom geschützte Anordnung möglich, die auch zu einer sehr kompakten Vorrichtung führt.

Schließlich ermöglicht die erfindungsgemäße Anlage eine sehr einfache Bauweise der Vorrichtung, da mit Ausnahme der verlagerbaren Probenaufnahme auf bewegliche Teile vollständig verzichtet werden kann. Die für die Verlagerungsbewegung erforderlichen Lager sind geschützt untergebracht und somit vor Verschmutzungen geschützt. Der Wartungsaufwand wird damit deutlich reduziert.

Die Anordnung von Führungen bzw. Halterungen für die Probenaufnahme unterhalb der oberen Fördereinrichtung ermöglicht auch eine sehr robuste und stabile Ausbildung, so dass die großen Materialflüsse im Bereich der Übergabestelle keinen Schaden an der Probenaufnahme verursachen können. Auch wenn die Probenaufnahme lediglich 0,2 Sekunden lang oder einen vergleichbar langen Zeitraum in ihrer Arbeitsposition verweilt, prasseln oder prallen in dieser kurzen Zeit doch enorm große Massen an Material auf die Oberfläche der Probenaufnahme, so dass auch sehr hohe Kräfte bzw. Drehmomente auf die Probenaufnahme ausgeübt werden. Eine besonders stabile Konstruktion, die diese Kräfte auffängt, wird erfindungsgemäß dadurch möglich, dass die Vorrichtung einschließlich der Führungen für die Probenaufnahme unterhalb der oberen Fördereinrichtung angeordnet ist und den dort vorhandenen Raum zur Anbringung einer entsprechend lang ausgebildeten Führungseinrichtung für die Probenaufnahme nutzt.

Die Anordnung eines Abfallproben-Archivierungsbehältnisses, welches vorzugsweise austauschbar und damit lösbar von der Vorrichtung ausgebildet ist, ermöglicht eine dauerhafte Archivierung. So kann auch noch nach einem längeren Zeitraum festgestellt werden, ob eine bestimmte Charge der Abfallstoffe eine bestimmte Verschmutzung, beispielsweise in Form von Mineralölen, aufweist oder nicht. Das Archivierungsbehältnis kann regelmäßig geleert bzw. ausgetauscht werden. Beispielsweise kann das Archivierungsbehältnis derartig groß bemessen sein, dass ein Austausch nur einmal täglich oder einmal alle paar Tage erfolgt. Selbst wenn vorgesehen ist, dass das Archivierungsbehältnis manuell entleert oder von der Vorrichtung entnommen werden muss, so müssen die damit beauftragten Mitarbeiter doch nur sehr viel seltener in die Halle eintreten, als es erforderlich wäre, um regelmäßig, in kürzeren Zeitabständen, Stichproben zu entnehmen.

Gemäß einer vorteilhaften Ausgestaltung der Erfindung ragt die Vorrichtung über die Breite der oberen Fördereinrichtung nicht hinaus. Dies ermöglicht eine besonders kompakte Bauweise und einen Einbau der Vorrichtung in bestehende Abfallbeförderungs- und/oder Trennanlagen.

Gemäß einer weiteren vorteilhaften Ausgestaltung der Erfindung ist die Probenaufnahme linear verlagerbar. Dies ermöglicht besonders kurze Eintauchzeiten der Probenaufnahme in den Materialstrom.

Gemäß einer weiteren vorteilhaften Ausgestaltung der Erfindung weist die Vorrichtung wenigstens eine Halterungs- und/oder Führungsanordnung, insbesondere eine Führungsstange, für die Probenaufnahme auf. Dies ermöglicht eine besonders einfache Bauweise.

Gemäß einer weiteren vorteilhaften Ausgestaltung der Erfindung ist die Halterungs- und/oder Führungsanordnung, insbesondere eine Führungsstange, ortsfest angeordnet. Dies ermöglicht eine besonders einfache Bauweise der Vorrichtung.

Gemäß einer weiteren vorteilhaften Ausgestaltung der Erfindung ist die Halterungs- und/oder Führungsanordnung, insbesondere eine Führungsstange, auf der dem Materialstrom abgewandten Seite der in Arbeitsposition befindlichen Probenaufnahme angeordnet. Dies ermöglicht eine besonders einfache Bauweise und stellt sicher, dass die Führung für die Probenaufnahme den Materialstrom nicht beeinträchtigt und von dem Material nicht beeinträchtigt wird.

Gemäß einer weiteren vorteilhaften Ausgestaltung der Erfindung ist die Halterungs- und/oder Führungsanordnung, insbesondere eine Führungsstange, unterhalb der oberen Fördereinrichtung angeordnet. Dies ermöglicht eine besonders kompakte Bauweise und ermöglicht den nachträglichen Einbau einer Vorrichtung in eine bestehende Abfallbeförderungs- und/oder Trennungsanlage.

Gemäß einer weiteren vorteilhaften Ausgestaltung der Erfindung sind wenigstens zwei zueinander parallel ausgerichtete Führungsstangen vorgesehen. Dies ermöglicht eine besonders stabile Bauweise bei einfacher Konstruktion.

Gemäß einer weiteren vorteilhaften Ausgestaltung der Erfindung ist der Probenaufnahme ein entlang der Halterungs- und/oder Führungsanordnung, insbesondere entlang einer Führungsstange, verlagerbarer Schlitten zugeordnet. Dies ermöglicht eine besonders einfache Konstruktion.

Gemäß einer weiteren vorteilhaften Ausgestaltung der Erfindung ist der Schlitten auf der dem Materialstrom abgewandten Seite der in Arbeitsposition befindlichen Probenaufnahme angeordnet. Dies ermöglicht eine besonders einfache Konstruktion und eine kompakte Bauweise. Zugleich stellt diese Konstruktion sicher, dass der Materialstrom durch den Schlitten nicht beeinträchtigt wird.

Gemäß einer weiteren vorteilhaften Ausgestaltung der Erfindung weist der Schlitten wenigstens ein Lager, insbesondere ein Gleitlager, für die Führungsstange auf. Dies ermöglicht eine besonders einfache Konstruktion.

Gemäß einer weiteren vorteilhaften Ausgestaltung der Erfindung erstreckt sich das Lager, insbesondere das Gleitlager, über einen Großteil oder über die gesamte Länge des Schlittens, bezogen auf dessen Verlagerungsrichtung. Dies ermöglicht eine besonders stabile und robuste Bauweise. Insbesondere kann das Lager, bei Betrachtung der Verlagerungsrichtung des Schlittens, auch länger ausgebildet sein als die Probenaufnahme in Verlagerungsrichtung langgestreckt ist. Die aktive, das heißt wirksame Oberfläche der Probenaufnahme kann relativ kurz ausgebildet sein, bezogen auf die Verlagerungsrichtung der Probenaufnahme, wohingegen das Lager, und gleichermaßen auch die zugehörige Führungsstange, in dieser Richtung länger ausgebildet ist.

Mit anderen Worten ist gemäß einer vorteilhaften Ausgestaltung der Erfindung auch vorgesehen, dass eine Verlagerung der Probenaufnahme entlang einem Verlagerungsweg erfolgt, der deutlich größer ist als die Länge der effektiven Oberfläche der Probenaufnahme bezogen auf ihre Verlagerungsrichtung.

Gemäß einer weiteren vorteilhaften Ausgestaltung der Erfindung weist die Vorrichtung einen Antrieb, insbesondere einen pneumatischen Antrieb auf. Dies ermöglicht eine einfache Konstruktion und einen Rückgriff auf herkömmliche bekannte und handelsübliche Antriebe.

Gemäß einer besonders vorteilhaften Ausgestaltung der Erfindung ist der Antrieb von einem kolbenstangenlosen Zylinder gebildet. Dies ermöglicht eine besonders einfache Konstruktion. Beispielsweise kann als Antrieb ein kolbenstangenloser Zylinder verwendet werden, der von der Firma Festo AG & Co. KG in Esslingen bezogen werden kann.

Gemäß einer weiteren vorteilhaften Ausgestaltung der Erfindung ist der Antrieb oberhalb des Schlittens und unterhalb der oberen Fördereinrichtung, angeordnet. Dies ermöglicht eine besonders kompakte Bauweise und eine besonders sichere, geschützte Unterbringung des Antriebes. Der Antrieb ist bei dieser Anordnung vor dem Materialstrom und vor Verschmutzung sicher geschützt.

Gemäß einer weiteren vorteilhaften Ausgestaltung der Erfindung besitzt die Probenaufnahme eine Länge, bezogen auf ihre Verlagerungsrichtung, die im Bereich von 200 mm +/- 100 mm, insbesondere +/- 50 mm, weiter insbesondere +/- 10 mm liegt. Dies ermöglicht eine besonders kompakt und stabil ausgestaltete Probenaufnahme.

Gemäß einer weiteren vorteilhaften Ausgestaltung der Erfindung besitzt der Schlitten eine Länge, bezogen auf seine Verlagerungsrichtung, die größer ist als die Länge der Probenaufnahme, bezogen auf ihre Verlagerungsrichtung. Dies ermöglicht eine besonders robuste und stabile Konstruktion.

Gemäß einer weiteren vorteilhaften Ausgestaltung der Erfindung besitzt der Schlitten eine Länge, bezogen auf seine Verlagerungsrichtung, die im Bereich von 1200 mm +/- 500 mm, insbesondere +/- 300 mm, weiter insbesondere 100 mm liegt. Dies ermöglicht eine besonders robuste, stabile Konstruktion.

Gemäß einer weiteren vorteilhaften Ausgestaltung der Erfindung besitzt die Probenaufnahme eine Breite, die im Wesentlichen der Breite der oberen Fördereinrichtung, insbesondere im Wesentlichen der Breite eines oberen Förderbandes, entspricht. Bei dieser Ausgestaltung der Erfindung besteht die Möglichkeit, eine Probe entlang der gesamten Breite der Fördereinrichtung zu entnehmen, so dass eine besonders repräsentative Stichprobe des transportierten Abfalls entnommen werden kann. Dies erhöht die Qualität der Stichproben.

Gemäß einer weiteren vorteilhaften Ausgestaltung der Erfindung weist die Probenaufnahme eine im Wesentlichen flache, plane Oberfläche auf. Dies ermöglicht eine besonders einfache Konstruktion eines Abstreiferelementes und eine vollständige Entnahme der Stichprobe von der Probenaufnahme bei der Verlagerung der Probenentnahme von der Arbeits- in die Ruheposition.

Gemäß einer weiteren vorteilhaften Ausgestaltung der Erfindung ist die Probenaufnahme von einem plattenförmigen Körper gebildet. Dies ermöglicht eine besonders einfache Bauweise.

Gemäß einer weiteren vorteilhaften Ausgestaltung der Erfindung ist die Probenaufnahme lösbar an dem Schlitten befestigbar. Auf diese Weise kann besonders einfach eine Anpassung der Probenaufnahme an unterschiedliche Abfallarten erzielt werden. Hierzu ist anzumerken, dass in einer Abfall-Beförderungs-, Trenn- und/oder Sortieranlage unzählige Übergabestellen zwischen unterschiedlichen Fördereinrichtungen bestehen, und, je nach dem, welcher Trennungs- oder Reinheits- oder Sortierungsgrad des Abfallstoffes erreicht ist, die Abfallmaterialströme unterschiedlich beschaffen sind. Für organische Abfälle können dementsprechend andere Probenaufnahmen sinnvoll einsetzbar sein, als bei im Wesentlichen papierhaltigen Abfällen. Durch Wechsel der Probenaufnahme und Austausch in Anpassung an die Art des Abfalls kann eine besonders optimierte Probenentnahme erzielt werden.

Gemäß einer weiteren vorteilhaften Ausgestaltung der Erfindung weist die Probenaufnahme auf ihrer dem Materialstrom abgewandten Seite eine Schneide auf. Diese kann mit einem Widerlager kooperieren. Besonders vorteilhaft ist, wenn das Widerlager von dem Abstreiferelement gebildet ist.

Die Schneide kann dazu dienen, Gegenstände, wie Kabel, Seile oder Drähte, die in dem Materialstrom enthalten waren und die sich wider Erwarten doch auf irgendeine Weise an der Probenaufnahme verhakt oder verfangen haben, von der Probenaufnahme zu trennen. Hierzu kann das Widerlager ausreichend stabil ausgebildet sein und bei der Rückzugsbewegung der Probenaufnahme, das heißt bei der von dem Antrieb initiierten Verlagerungsbewegung der Probenaufnahme aus ihrer Arbeits- in ihre Ruheposition die Probenaufnahme gegen das Widerlager gedrückt werden. An der Probenaufnahme verfangene Gegenstände können dabei durch die Schneide aufgrund der Zugkraft des Antriebs gegen das Widerlager zertrennt werden, so dass sich die Kabel od. dgl. nachfolgend von der Probenaufnahme lösen können.

Gemäß einer vorteilhaften Ausgestaltung der Erfindung ist zwischen dem Abstreiferelement und dem Abfallproben-Archivierungsbehältnis eine Rutsche angeordnet. Dies ermöglicht eine unmittelbare Zuführung der Abfall-Stichprobe zu dem ganz unten angeordneten Abfallproben-Archivierungsbehältnis bei einfacher Konstruktion.

Gemäß einer weiteren vorteilhaften Ausgestaltung der Erfindung erfolgt eine Verlagerung der Probenaufnahme zwischen ihrer Arbeits- und ihrer Ruheposition zyklisch. Hier kann z.B. die Einstellung regelmäßiger Verweilzeiten der Probenaufnahme in der Arbeits- bzw. in der Ruheposition elektrisch, elektronisch, maschinengesteuert oder manuell erfolgen.

Vorzugsweise verweilt die Probenaufnahme während eines Zyklus nur kurzzeitig, insbesondere weniger als eine Sekunde, vorzugsweise weniger als 0,5 Sekunden, weiter vorzugsweise ca. nur 0,2 Sekunden lang, in dem Materialstrom bzw. in ihrer Arbeitsposition. Während dieser recht kurzen Verweilzeiten können genügend große Materialmengen als Stichproben gesammelt werden.

In ihrer zurückgezogenen, unterhalb der oberen Förderungseinrichtung befindlichen Ruheposition kann die Probenaufnahme demgegenüber länger, beispielsweise 6 Minuten lang, verweilen.

Das Abfallproben-Archivierungsbehältnis kann austauschbar ausgebildet sein, so dass es nach Erreichen einer bestimmten Füllmenge durch ein neues, leeres Abfallproben-Archivierungsbehältnis ersetzt werden kann.

Die Erfindung betrifft des Weiteren eine Vorrichtung zur Entnahme von Proben aus einem fallenden Materialstrom. Insbesondere betrifft diese Erfindung eine Vorrichtung zum Einsatz beziehungsweise zur Verwendung in einer Anlage zur Beförderung und/oder Trennung und/oder Sortierung von Abfallstoffen.

Der Erfindung liegt die Aufgabe zugrunde, eine sichere und reibungslose Stichproben-Entnahme der Abfallstoffe bei einfacher Bauweise der Vorrichtung zu ermöglichen.

Die Erfindung löst diese Aufgabe mit den Merkmalen des Anspruches 40.

Bezüglich der Vorteile und der wesentlichen Prinzipien dieser Erfindung wird auf die obigen Ausführungen verwiesen, die sich auf eine Anlage beziehen, bei der die erfindungsgemäße Vorrichtung eingesetzt wird.

Es besteht die Möglichkeit, die Vorrichtung gemäß Anspruch 40 mit einem oder mit mehreren zuvor geschilderten und zum Teil gewürdigten Merkmalen zu kombinieren.

Weitere Vorteile der Erfindung ergeben sich anhand der nicht zitierten Unteransprüche, sowie anhand der nun folgenden Beschreibung mehrerer in den Zeichnungen dargestellter Ausführungsbeispiele. Darin zeigen:
- Fig. 1: in einer schematischen, teilgeschnittenen Ansicht eine erste obere und eine zweite untere Fördereinrichtung im Bereich einer Übergabestelle sowie schematisch angedeutet eine Vorrichtung zur Entnahme einer Stichprobe eines Abfallstoffes aus einem fallenden Materialstrom,
- Fig. 2: in einer schematischen Draufsicht die Vorrichtung gemäß Fig. 1, etwa gemäß Ansichtspfeil II,
- Fig. 3: in einer Darstellung gemäß Fig. 2 ein zweites Ausführungsbeispiel einer erfindungsgemäßen Vorrichtung, bei der die Förderrichtungen der beiden Förderbänder senkrecht zueinander stehen,
- Fig. 4: die Vorrichtung zur Entnahme einer Stichprobe gemäß Fig. 3 in einer schematischen, teilgeschnittenen Alleindarstellung, etwa gemäß Fig. 3, unter Weglassung der Fördereinrichtung, mit in Arbeitsposition befindlicher Probenaufnahme,
- Fig. 5: in einer Darstellung gemäß Fig. 4 die Vorrichtung mit in Ruheposition befindlicher Probenaufnahme,
- Fig. 6: in einer schematischen, teilgeschnittenen Seitenansicht etwa gemäß Ansichtspfeil VI in Fig. 4 die Vorrichtung gemäß Fig. 4, und
- Fig. 7: in einer schematischen, teilgeschnittenen Seitenansicht in einer Darstellung gemäß Fig. 6, eine Seitenansicht der Vorrichtung gemäß Fig. 5 etwa gemäß Ansichtspfeil VII in Fig. 5.

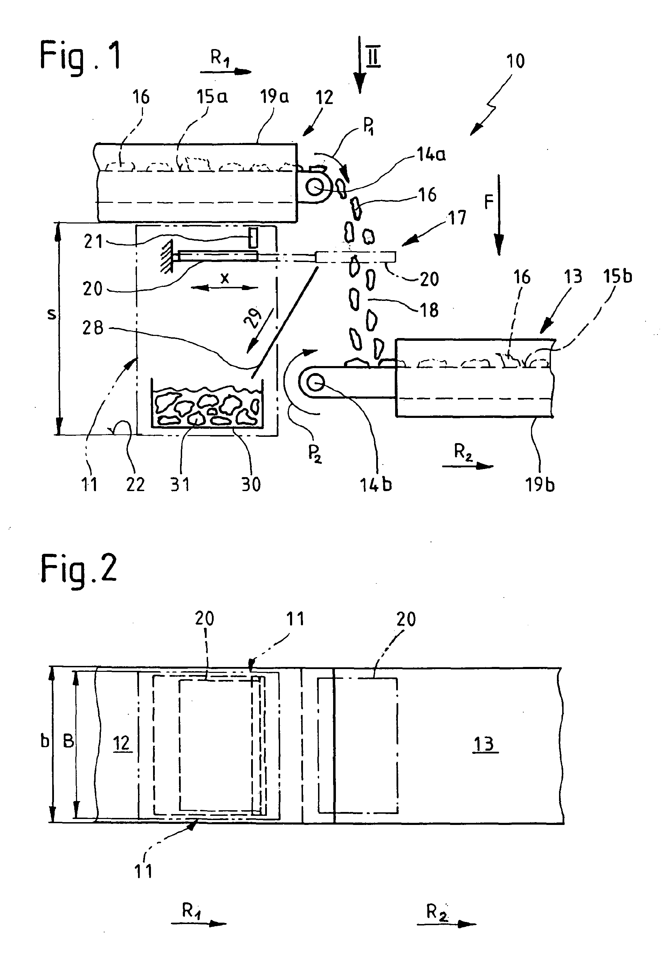

Die in ihrer Gesamtheit in den Figuren mit 10 bezeichnete Anlage ist in Fig. 1 lediglich teilweise dargestellt. Die Anlage 10 zur Beförderung und/oder Trennung und/oder Sortierung von Abfallstoffen kann man sich typischerweise in einer riesengroßen Halle angeordnet vorstellen, in der eine Vielzahl von Fördereinrichtungen, insbesondere kilometerlange Förderbänder, angeordnet sind. Mit den Förderbändern wird der Abfallstoff, insbesondere Hausabfälle, wie sie in der Restmülltonne anfallen, transportiert. Es können eine Vielzahl von nicht dargestellten Einrichtungen in der Anlage 10 vorgesehen sein, die unterschiedliche Arten oder Bestandteile des Abfallstoffes erkennen und entsprechend selektieren können. Demgemäß können auch Abzweigungen an den Fördereinrichtungen vorgesehen sein, die es ermöglichen, unterschiedliche Abfallstoffe unterschiedlichen Orten der Anlage 10 zuzuführen.

Fig. 1 zeigt als Teil der Anlage 10 in schematischer, teilgeschnittener Ansicht eine obere Fördereinrichtung 12 und eine untere Fördereinrichtung 13. Beide Fördereinrichtungen 12, 13 sind in Form von endlos umlaufenden Förderbändern ausgebildet, wobei angedeutete Umlenk- und Antriebsrollen 14a, 14b schematisch verdeutlichen sollen, dass eine Umlaufbewegung der Förderbänder in Form der angedeuteten Pfeile P₁ und P₂ erfolgt.

Die Förderrichtung des oberen Förderbandes 12 ist mit R₁ und die Förderrichtung des unteren Förderbandes 13 ist mit R₂ bezeichnet. Ausweislich Fig. 2, die eine Ansicht der Vorrichtung gemäß Fig. 1 darstellt, ist ersichtlich, dass die beiden Förderbänder 12, 13 in überlappender Anordnung vorgesehen sind und zueinander parallele Förderrichtungen R₁ und R₂ aufweisen.

Die Fördereinrichtungen 12, 13 sind verkleidet oder gekapselt, wobei die Verkleidung in den Figuren mit 19a und 19b bezeichnet ist. Die Verkleidungen können beispielsweise Blechschürzen sein, die z.B. eine hohe Staubbelastung in der Halle verhindern oder vermindern.

Im Bereich einer Übergabestelle 17 werden die in den Figuren schematisch angedeuteten Abfallstoffe 16, die auf der jeweiligen Oberseite 15a bzw. 15b des entsprechenden Förderbandes 12 bzw. 13 transportiert werden, von der oberen Fördereinrichtung 12 an die untere Fördereinrichtung 13 übergeben. Die Übergabestelle 17 ist somit als eine Frei-Fall-Stelle ausgebildet, in der ein Materialstrom 18 entlang der Fallrichtung F aufgrund der Schwerkraft nach unten fällt. Die überlappende Anordnung der beiden Fördereinrichtungen 12 und 13 stellt dabei sicher, dass die Abfallstoffe auch die untere Fördereinrichtung 13 erreichen.

In einer Anlage 10 zur Beförderung, Trennung und/oder Sortierung von Abfallstoffen sind unzählige derartige Übergabestellen 17 vorgesehen. Das Netz von Förderbändern oder anderen Fördereinrichtungen muss zwangsläufig an vielen Orten die transportierten Abfallstoffe auf andere Fördereinrichtungen übergeben. Im Bereich der Übergabestelle 17 ist typischerweise keine Kapselung oder Verkleidung 19a, 19b vorgesehen.

Die Platzverhältnisse sind trotz der Größe der Hallen oft sehr beengt. Der Abstand s zwischen der oberen Fördereinrichtung 12 und einem Boden 22 des Aufstellortes der Fördereinrichtung ist typischerweise relativ klein, allein um eine leichte Zugänglichkeit zu den Fördereinrichtungen 12, 13 zu gewährleisten.

Erfindungsgemäß ist eine in Fig. 1 in ihrer Gesamtheit mit 11 bezeichnete und dort nur schematisch angedeutete Vorrichtung zur Entnahme von Stichproben der Abfallstoffe vorgesehen. Die gesamte Vorrichtung 11 ist unterhalb der oberen Fördereinrichtung 12 angeordnet, also in einem Bauraum, der ohnehin zur Verfügung steht. Wie sich aus der Draufsicht gemäß Fig. 2 ergibt, ist die Vorrichtung 11 vollständig von der oberen Fördereinrichtung 12 abgedeckt. Die Breite B der Vorrichtung 11 entspricht somit im Wesentlichen der Breite b der oberen Fördereinrichtung 12 bzw. ist geringfügig kleiner als die Breite b der Fördereinrichtung 12.

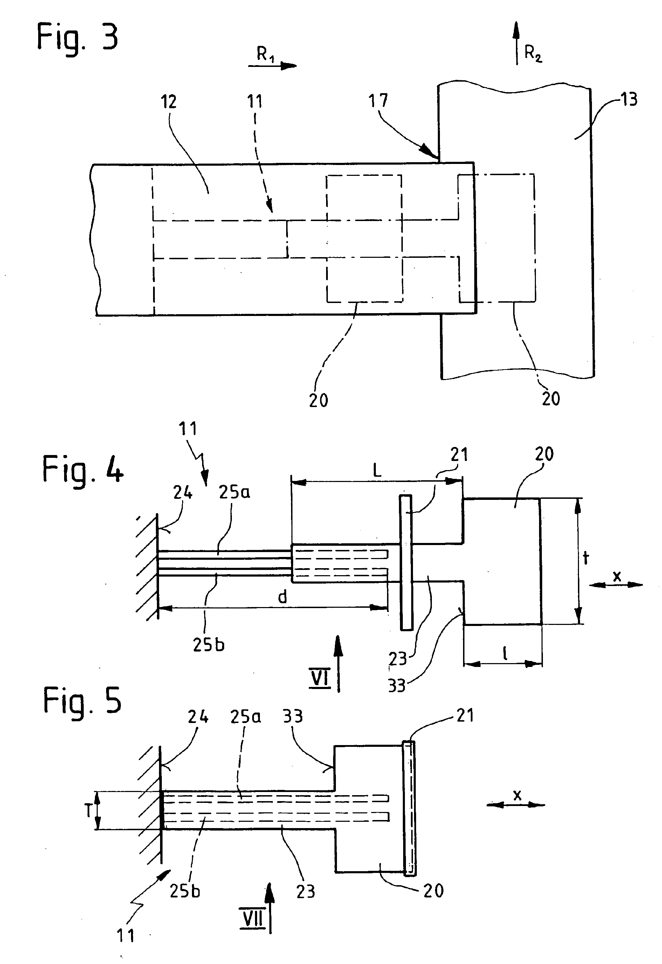

Die Vorrichtung 11 umfasst eine in Richtung des Doppelpfeiles x verlagerbare Probenaufnahme 20, eine Rutsche 28 und ein Archivierungsbehältnis 30. Die Vorrichtung 11 umfasst des Weiteren eine Führungs- oder Halterungsanordnung 25a, 25b, einen Schlitten 23 und einen Antrieb 26, die jedoch in Fig. 1 aus Gründen der Übersichtlichkeit nicht dargestellt und erst später anhand der Figuren 3 bis 7 erörtert sind. Die Funktionen der einzelnen Teile sollen nachfolgend erläutert werden:

Die Probenaufnahme 20 ist im Wesentlichen plattenartig oder tablettartig ausgebildet und in Fig. 1 lediglich schematisch skizziert. Aus Fig. 1 ist ersichtlich, dass die Probenaufnahme 20 zwischen einer zurückgezogenen, in Fig. 1 in durchgezogenen Linien, linken Ruheposition und einer ausgefahrenen, in den Materialstrom 18 eintauchenden und bezüglich Fig. 1 rechten gestrichpunkteten Arbeitsposition verlagerbar.

In der Arbeitsposition taucht die Probenaufnahme 20 in den Materialstrom 18 des Abfallstoffes 16 kurzzeitig ein und kann mit ihrer Oberseite 34 eine Material-Stichprobe aufnehmen. Sobald die gewünschte Probenmenge erreicht ist, was typischerweise schon nach sehr kurzer Zeit, beispielsweise bereits nach 0,2 Sekunden der Fall ist, wird die Probenaufnahme 20 bezüglich Fig. 1 nach links verlagert, das heißt zurückgezogen, und in ihre Ruheposition rückverlagert.

Ein oberhalb der Probenaufnahme 20, allerdings unterhalb der Fördereinrichtung 12 angeordnetes, ortsfestes Abstreiferelement 21 kann mit seiner Unterseite 35 derart mit der Oberfläche 34 der Probenaufnahme 20 zusammenwirken, dass bei der Rückfahrbewegung der Probenaufnahme 20 das Abstreiferelement 21 die entnommene Stichprobe von der Oberseite 34 abschabt bzw. zurückhält, so dass, wenn die Probenaufnahme 20 ihre in Fig. 2 dargestellte linke Ruheposition erreicht hat, die Stichprobe nach unten fallen kann, auf eine Rutsche 28 trifft und in Rutschrichtung 29 in einem Archivierungsbehältnis 30 landet. Dort sammelt sich, wie in Fig. 1 angedeutet, eine Vielzahl von Stichproben, wenn die Verlagerungsbewegung der Probenaufnahme zyklisch erfolgt.

Aus der schematischen Anordnung gemäß Fig. 1 wird deutlich, dass für den Fall, dass die Probenaufnahme 20 ihre Ruheposition erreicht hat, kein Teil oder Element der Vorrichtung 11 in den Materialstrom 18, der sich kontinuierlich ergießt, hineinragt und den Materialstrom auf diese Weise beeinträchtigen kann. Die Vorrichtung 11 ist somit vollständig unterhalb der oberen Fördereinrichtung 12 angeordnet.

Um eine sichere, stabile und wartungsfreie Betriebsweise der Vorrichtung 11 zu erreichen, ist eine besondere Aufhängung und Führung vorgesehen, die nunmehr anhand der Figuren 4 bis 7 zusammen mit dem Antrieb der Probenaufnahme 20 erläutert werden soll:

Aus Fig. 4 ist zunächst ersichtlich, dass die Probenaufnahme 20 eine Breite t aufweist, die im Wesentlichen der Breite b der oberen Fördereinrichtung 12 entspricht. Damit ist es möglich, eine Stichprobe über die gesamte Breite b des auf dem oberen Förderband 12 transportierten Abfallstoffes 16 zu erzielen, so dass die Stichprobe besonders repräsentativ ist.

Aus den Figuren 4 bis 7 ist des Weiteren ersichtlich, dass sich auf der dem Materialstrom 18 abgewandten Seite der Probenaufnahme 20 an die Probenaufnahme ein schmalerer Schlitten 23 anschließt. Während die Probenaufnahme 20 eine Länge I aufweist, die beispielsweise in der Größenordnung von 200 mm liegen kann, ist der Schlitten 23 demgegenüber deutlich länger ausgebildet und weist beispielsweise eine Länge L in der Größenordnung von 1.200 mm auf. Der Verlagerungsweg, den die Probenaufnahme zwischen ihrer Arbeits- und ihrer Ruheposition zurücklegt, beträgt beim Ausführungsbeispiel beispielsweise ca. 800 mm bis 900 mm. Der Verlagerungsweg ist somit deutlich größer als die Länge der Probenaufnahme.

Innerhalb des Schlittens 23 sind zwei im Einzelnen nicht dargestellte Aufnahmen und Gleitlager für ortsfest, an einer Montageplatte 24 befestigte Führungsstangen 25a und 25b angeordnet. Die Aufnahmen für die Führungsstangen 25a und 25b sind im einfachsten Falle als Sackbohrungen ausgebildet. Vorzugsweise werden aber besonders abgedichtete Gleitlager verwendet, die einerseits einer stabilen, robusten und wartungsarmen Aufhängung des Schlittens an der Vorrichtung 11 und andererseits auch einer präzisen und verschleißarmen sowie nahezu wartungsfreien Führung des Schlittens 23 dienen.

Die Führungsstangen 25a und 25b weisen eine Länge d auf, die deutlich größer ist als die Länge I der Probenaufnahme 20 und beispielsweise in der Größenordnung der Länge L des Schlittens 23 liegt. Aus Fig. 5 ist ersichtlich, dass die Länge d der Führungsstangen 25a und 25b die Länge L des Schlittens 23 auch übersteigen kann.

Die Führungsstangen 25a, 25b können z.B. einen kreisförmigen Querschnitt aufweisen und sind damit auch als Wellen bezeichenbar. In dem Schlitten 23 sind dem entsprechend lang ausgebildete Gleitlager vorgesehen, die eine stabile, robuste und wartungsfreie bzw. wartungsarme Linearverlagerung des Schlittens 23 ermöglichen.

Die Führungsstangen 25a und 25b dienen der Aufhängung des Schlittens 23 und der mit dem Schlitten bewegbaren Probenaufnahme 20 an der Vorrichtung 11. Sie stellen aber darüber hinaus auch eine Zwangssteuerungseinrichtung oder Führung für die Probenaufnahme 20 und den Schlitten 23 bereit.

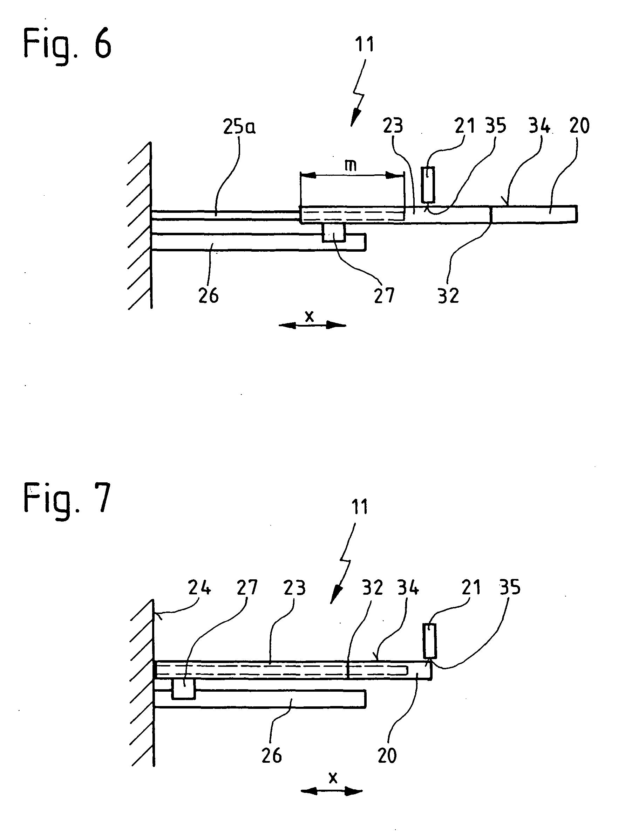

Aus den Figuren 6 und 7 ist des Weiteren ein Antrieb 26 ersichtlich, der vorteilhafterweise von einem kolbenstangenlosen oder einem anders abgedichteten Zylinder gebildet sein kann. Der Antrieb 26 ist ebenfalls ortsfest, insbesondere an der Montageplatte 24 der Vorrichtung 11 festgelegt und kann, beispielsweise pneumatisch getrieben, ein Kopplungselement 27 in Richtung des Doppelpfeiles x verlagern. Das Kopplungsglied 27 ist an dem Schlitten 23 befestigt und mit diesem somit bewegungseinheitlich verbunden.

In den Figuren 6 und 7 ist der Antrieb 26 und das Kopplungselement 27 unterhalb des Schlittens 23 angeordnet dargestellt. Bei einer demgegenüber vorteilhaften, nicht dargestellten alternativen Ausführung der Erfindung sind der Antrieb 26 und das Kopplungselement 27 oberhalb des Schlittens 23 angeordnet.

Bei in Ruheposition befindlicher Probenaufnahme 20 gemäß Fig. 7 kann der Antrieb 26 ein Signal erhalten, sich in Bewegung zu setzen. Der Linearantrieb verlagert das Kopplungselement 27 und damit auch den Schlitten 23 und die Probenaufnahme 20 sehr schnell in ihre in Fig. 6 dargestellte ausgefahrene Probenentnahmeposition, in der die Probenaufnahme 20 in den dort nicht dargestellten Materialstrom 18 kurzzeitig eintaucht. Die Führungsstangen 25a, 25b, die ortsfest angeordnet sind, ragen selbst bei maximal ausgefahrenem Schlitten 23, wie aus Fig. 6 ersichtlich ist, noch relativ weit, nämlich um einen Abschnitt m, in den Schlitten 23 hinein. Durch diesen relativ langgestreckten Haltebereich wird sichergestellt, dass auch große, auf die Oberseite 34 der Probenaufnahme 20 aufprallende Materialmassen die Vorrichtung 11 nicht beschädigen können.

Die Probenaufnahme 20 verbleibt typischerweise längere Zeit in ihrer Ruheposition gemäß Fig. 7, beispielsweise einige Minuten, vorzugsweise ca. 6 Minuten. Aufgrund des vorteilhafterweise verwendeten Linearantriebes 26 kann die Probenaufnahme 20 sehr schnell aus ihrer Ruheposition in ihre in Fig. 6 dargestellte Arbeitsposition verlagert werden, und verbleibt nur sehr kurze Zeit, beispielsweise etwa 0,2 Sekunden, in der Arbeitsposition gemäß Fig. 6. Anschließend wird sie sehr schnell wieder zurückgezogen.

Der beschriebene Verlagerungszyklus kann automatisch erfolgen, wobei die Vorrichtung 11 beispielsweise auch autark, das heißt unabhängig von einem zentralen Steuerungssystem, diese zyklischen Bewegungen ausführen kann. Es ist aber auch denkbar, dass die Vorrichtung 11 in ein Steuerungsverbund oder Netzwerk, beispielsweise auch von einem Computer oder einer anderen Steuerungszentrale gesteuert, angebunden ist, so dass die Zykluszeiten zentral bestimmt und möglicherweise auch geändert werden können, falls dies in Anpassung an unterschiedliche Beschaffenheiten der Abfallstoffe 16 erforderlich oder gewünscht sein sollte.

Vorteilhaft ist, dass der gesamte Antrieb 26 und die Halterungs- und Führungseinrichtung 25a, 25b einschließlich des verfahrbaren Schlittens 23 auf der dem Materialstrom 18 abgewandten Seite der Probenaufnahme 20 angeordnet sind. Das einzige, mit dem Material 16 in Kontakt kommende Bauteil der Vorrichtung 11 ist somit die Probenaufnahme 20. Damit besteht größtmögliche Sicherheit für die übrigen Teile der Vorrichtung 11.

Die Vorrichtung 11 ist zwar in Förderrichtung R₁ der oberen Fördereinrichtung 12 relativ langbauend ausgebildet. Sie kann aber den vorhandenen, unterhalb der oberen Fördereinrichtung 12 vorhandenen Bauraum optimal ausnutzen, ohne dass hierzu irgendwelche Eingriffe in die Struktur einer vorhandenen Abfallbeförderungs- und/oder Sortieranlage erforderlich sind. Damit ist auch ein nachträglicher Einbau einer Vorrichtung 11 in eine vorhandene Anlage ohne großen Aufwand durchführbar.

Schließlich weist die Vorrichtung 11 bis auf das linear bewegliche Probenaufnahmetablett 20 und den zugehörigen Schlitten 23 überhaupt keine beweglichen Teile auf, die in der sehr schmutzanfälligen Einbausituation ansonsten möglicherweise die Funktion der Vorrichtung 11 beeinträchtigen können.

Das Abstreiferelement 21 sorgt auch dafür, dass aus dem Materialstrom 18 entnommener Abfall nicht in einen Bereich linksseitig des Abstreiferelementes 21 gelangen kann. Das Abstreiferelement 21 ist dazu derart ausgebildet, dass es sehr eng anliegend mit der Oberfläche 34 des Probenaufnahme-Tablettes 20 kooperiert. Beispielsweise kann das Abstreiferelement 21 auch besen- oder bürstenartig oder aus einem geeigneten Kunststoffmaterial nach Art einer Abstreiflippe ausgebildet sein.

Je nach Anwendung besteht auch die Möglichkeit, der dem Materialstrom 18 abgewandten Kante 33 (vgl. Fig. 5) der Probenaufnahme 20 eine messerartige Schneide zuzuordnen. In diesem Falle empfiehlt es sich, die Probenaufnahme 20 im Unterschied zu den Darstellungen der Figuren 6 und 7 gegenüber dem Schlitten 23 erhaben, das heißt erhöht, anzuordnen. Die Schneide 33 kann mit einem Widerlager, welches beispielsweise auch von dem Abstreifer 21 bereitgestellt werden kann, kooperieren. Das Widerlager kann aber auch von einem nicht dargestellten gesonderten Element gebildet werden. Die Schneide 33 und das Widerlager können bei einer Rückzugsbewegung der Probenaufnahme 20 aus ihrer Arbeits- in ihre Ruheposition möglicherweise an der Probenaufnahme 20 festhängende Seile, Drähte oder Kabel durchtrennen, so dass die Bewegungskinematik der Probenaufnahme 20 und des Schlittens 23 durch derartige, im Abfallstrom befindliche Hindernisse, die sich an der Probenaufnahme verfangen, nicht beeinträchtigt wird.

Wie sich aus Fig. 3 ergibt, kann die erfindungsgemäße Vorrichtung 11 auch an solchen Übergabestellen 17 eingesetzt werden, an denen eine obere Fördereinrichtung 12 den Abfallstoff 16 in Form eines fallenden Materialstromes 18 an eine untere Fördereinrichtung 13 übergibt, wobei die Förderrichtungen R₁ und R₂ der beiden Fördereinrichtungen unterschiedlich ausgerichtet sind. Fig. 3 zeigt, dass die untere Fördereinrichtung 13 eine Förderungsrichtung R₂ aufweist, die um 90° versetzt zu der Förderrichtung R₁ der oberen Fördereinrichtung 12 ausgerichtet ist.

Die Probenaufnahme 20 kann im Bereich einer Verbindungsstelle 32 (vgl. Fig. 6) lösbar an dem Schlitten 23 befestigbar sein. Die Probenaufnahme 20 kann hierzu auch in Anpassung an unterschiedliche Beschaffenheiten der Abfallstoffe 16 austauschbar ausgebildet sein.

## Patentansprüche

1. Anlage (10) zur Beförderung und/oder Trennung und/oder Sortierung von Abfallstoffen (16), wie Hausabfällen, mit einer Vielzahl von Fördereinrichtungen (12, 13), insbesondere Förderbändern, wobei wenigstens eine erste, obere Fördereinrichtung (12) den Abfallstoff als fallenden Materialstrom (18) an eine zweite, untere und zu der ersten Fördereinrichtung (12) überlappend angeordnete Fördereinrichtung (13) übergibt, **dadurch gekennzeichnet, dass** unterhalb der oberen Fördereinrichtung eine Vorrichtung (11) zur Entnahme einer Stichprobe des Abfallstoffes aus dem Materialstrom (18) angeordnet ist, die eine Probenaufnahme (20) aufweist, die zwischen einer in den Materialstrom eintauchenden Arbeitsposition (Fig. 6) und einer unterhalb der oberen Fördereinrichtung befindlichen Ruheposition (Fig. 7) verlagerbar ist, wobei unterhalb der oberen Fördereinrichtung ein Abstreiferelement (21) vorgesehen ist, das in Folge einer Verlagerung der Probenaufnahme aus der Arbeits- in die Ruheposition die Abfallprobe von der Oberseite (34) der Probenaufnahme (20) abstreift und einem unterhalb des Abstreiferelementes (21) befindlichen Abfallproben-Archivierungsbehältnis (30) zuführt.

2. Anlage nach Anspruch 1, **dadurch gekennzeichnet, dass** die Vorrichtung (11) über die Breite (b) der oberen Fördereinrichtung (12) nicht hinausragt.

3. Anlage nach Anspruch 1 oder 2, **dadurch gekennzeichnet, dass** die Probenaufnahme (20) linear (Doppelpfeil x) verlagerbar ist.

4. Anlage nach einem der vorgenannten Ansprüche, **dadurch gekennzeichnet, dass** die Vorrichtung (11) wenigstens eine Halterungs- und/oder Führungsanordnung (25a, 25b), insbesondere eine Führungsstange, für die Probenaufnahme (20) aufweist.

5. Anlage nach Anspruch 4, **dadurch gekennzeichnet, dass** die Halterungs- und/oder Führungsanordnung (25a, 25b), insbesondere eine Führungsstange, ortsfest angeordnet ist.

6. Anlage nach Anspruch 4 oder 5, **dadurch gekennzeichnet, dass** die Halterungs- und/oder Führungsanordnung (25a, 25b), insbesondere eine Führungsstange, auf der dem Materialstrom (18) abgewandten Seite der in Arbeitsposition befindlichen Probenaufnahme (20) angeordnet ist.

7. Anlage nach einem der Ansprüche 4 bis 6, **dadurch gekennzeichnet, dass** die Halterungs- und/oder Führungsanordnung (25a, 25b), insbesondere eine Führungsstange, auf der dem Materialstrom (18) abgewandten Seite des Abstreiferelementes (21) angeordnet ist.

8. Anlage nach einem der Ansprüche 4 bis 7, **dadurch gekennzeichnet, dass** die Halterungs- und/oder Führungsanordnung (25a, 25b), insbesondere eine Führungsstange, unterhalb der oberen Fördereinrichtung angeordnet ist.

9. Anlage nach einem der Ansprüche 4 bis 8, **dadurch gekennzeichnet, dass** wenigstens zwei zueinander parallel ausgerichtete Führungsstangen (25a, 25b) zur Bildung der Halterungs- und/oder Führungsanordnung vorgesehen sind.

10. Anlage insbesondere nach einem der Ansprüche 4 bis 9, **dadurch gekennzeichnet, dass** der Probenaufnahme (20) ein Schlitten (13) zugeordnet ist, der insbesondere entlang wenigstens einer Führungsstange verlagerbar ist.

11. Anlage nach Anspruch 10, **dadurch gekennzeichnet, dass** der Schlitten (23) auf der dem Materialstrom (18) abgewandten Seite der in Arbeitsposition befindlichen Probenaufnahme (20) angeordnet ist.

12. Anlage nach Anspruch 10 oder 11, **dadurch gekennzeichnet, dass** der Schlitten (23) wenigstens ein Lager, insbesondere ein Gleitlager, für die Führungsstange aufweist.

13. Anlage nach Anspruch 12, **dadurch gekennzeichnet, dass** sich das Lager, insbesondere das Gleitlager, im Wesentlichen über einen Großteil der Länge, insbesondere über die gesamte Länge, des Schlittens (23), bezogen auf dessen Verlagerungsrichtung, erstreckt.

14. Anlage nach einem der Ansprüche 10 bis 13, **dadurch gekennzeichnet, dass** die Probenaufnahme (20) gemeinsam mit dem Schlitten (23) verlagerbar ist.

15. Anlage nach einem der vorgenannten Ansprüche, **dadurch gekennzeichnet, dass** die Vorrichtung (11) einen Antrieb (26), insbesondere einen pneumatischen Antrieb, aufweist.

16. Anlage nach Anspruch 15, **dadurch gekennzeichnet, dass** der Antrieb (26) von einem kolbenstangenlosen Zylinder gebildet ist.

17. Anlage nach Anspruch 15 oder 16, soweit dieser auf einen der Ansprüche 10 bis 14 rückbezogen ist, **dadurch gekennzeichnet, dass** der Antrieb (26) an dem Schlitten (23) angreift.

18. Anlage nach einem der Ansprüche 15 bis 17, soweit dieser auf einen der Ansprüche 10 bis 14 rückbezogen ist, **dadurch gekennzeichnet, dass** der Antrieb (26) oberhalb des Schlittens (23) und unterhalb der oberen Fördereinrichtung (12) angeordnet ist.

19. Anlage nach einem der Ansprüche 15 bis 18, **dadurch gekennzeichnet, dass** der Antrieb (26) auf der dem Materialstrom (18) abgewandten Seite der Probenaufnahme (20) angeordnet ist.

20. Anlage nach einem der vorgenannten Ansprüche, **dadurch gekennzeichnet, dass** die Probenaufnahme (20) eine Länge (I), bezogen auf ihre Verlagerungsrichtung, besitzt, die kleiner als 500 mm aber größer als 50mm ist.

21. Anlage nach Anspruch 20, **dadurch gekennzeichnet, dass** die Probenaufnahme (20) eine Länge (I), bezogen auf ihre Verlagerungsrichtung, besitzt, die im Bereich von 200 mm +/- 100 mm liegt, insbesondere im Bereich von 200 mm +/- 50 mm liegt, weiter insbesondere im Bereich von 200 mm +/- 10 mm liegt.

22. Anlage nach einem der Ansprüche 10 bis 14, **dadurch gekennzeichnet, dass** der Schlitten (23) eine Länge (I), bezogen auf seine Verlagerungsrichtung, besitzt, die größer ist als die Länge (I) der Probenaufnahme (20), bezogen auf ihre Verlagerungsrichtung.

23. Anlage nach Anspruch 22, **dadurch gekennzeichnet, dass** der Schlitten (23) eine Länge (L), bezogen auf seine Verlagerungsrichtung, besitzt, die im Bereich von 1200 mm +/- 500 mm liegt, insbesondere im Bereich von 1200 mm +/- 300 mm liegt, weiter insbesondere im Bereich von 1200 mm +/- 100 mm liegt.

24. Anlage nach einem der vorgenannten Ansprüche, **dadurch gekennzeichnet, dass** die Probenaufnahme (20) eine Breite (t) besitzt, die im Wesentlichen der Breite (b) der oberen Fördereinrichtung (12), insbesondere im Wesentlichen der Breite eines oberen Förderbandes, entspricht.

25. Anlage nach einem der Ansprüche 10 bis 14, **dadurch gekennzeichnet, dass** der Schlitten (23) eine Breite (t) besitzt, die geringer ist als die Breite (t) der Probenaufnahme.

26. Anlage nach einem der vorgenannten Ansprüche, **dadurch gekennzeichnet, dass** die Probenaufnahme (20) eine im Wesentlichen flache Oberfläche (34) aufweist.

27. Anlage nach einem der vorgenannten Ansprüche, **dadurch gekennzeichnet, dass** die Probenaufnahme (20) von einem plattenförmigen Körper gebildet ist.

28. Anlage nach einem der Ansprüche 10 bis 14, **dadurch gekennzeichnet, dass** die Probenaufnahme (20) lösbar an dem Schlitten (23) befestigbar ist.

29. Anlage nach einem der vorgenannten Ansprüche, **dadurch gekennzeichnet, dass** die Probenaufnahme (20) an die Art oder Beschaffenheit des Abfalls (16) anpassbar und in Anpassung austauschbar ist.

30. Anlage nach einem der vorgenannten Ansprüche, **dadurch gekennzeichnet, dass** die Probenaufnahme (20) auf ihrer dem Materialstrom (18) abgewandten Seite eine Schneide (33) aufweist, die mit einem Widerlager kooperiert.

31. Anlage nach Anspruch 30, **dadurch gekennzeichnet, dass** das Widerlager von dem Abstreiferelement (21) gebildet ist.

32. Anlage nach einem der vorgenannten Ansprüche, **dadurch gekennzeichnet, dass** die beiden Fördereinrichtungen (12, 13) parallele Förderrichtungen (R₁, R₂) aufweisen (Fig. 2).

33. Anlage nach einem der Ansprüche 1 bis 31, **dadurch gekennzeichnet, dass** die beiden Fördereinrichtungen unterschiedliche Förderrichtungen (R₁, R₂) aufweisen (Fig. 3).

34. Anlage nach einem der vorgenannten Ansprüche, **dadurch gekennzeichnet, dass** wenigstens eine der beiden Fördereinrichtungen (12, 13) gekapselt ist (1 9a, 19b).

35. Anlage nach einem der vorgenannten Ansprüche, **dadurch gekennzeichnet, dass** zwischen dem Abstreiferelement (21) und dem Abfallproben-Archivierungsbehältnis (30) eine Rutsche (28) und/oder eine Fallstrecke (29) angeordnet ist.

36. Anlage nach einem der vorgenannten Ansprüche, **dadurch gekennzeichnet, dass** eine Verlagerung der Probenaufnahme (20) zwischen ihrer Arbeits- und ihrer Ruheposition zyklisch erfolgt.

37. Anlage nach Anspruch 36, **dadurch gekennzeichnet, dass** die Probenaufnahme (20) in einem Zyklus nur kurzzeitig, insbesondere weniger als 1 sec, vorzugsweise weniger als 0,5 sec, weiter vorzugsweise ca. 0,2 sec lang, in ihrer Arbeitsposition und/oder in dem Materialstrom verbleibt.

38. Anlage nach Anspruch 36 oder 37, **dadurch gekennzeichnet, dass** die Probenaufnahme (20) in einem Zyklus längere Zeit, insbesondere einige Minuten lang, insbesondere ca. 6 Minuten lang, in ihrer Ruheposition verbleibt.

39. Anlage nach einem der vorgenannten Ansprüche, **dadurch gekennzeichnet, dass** das Abfallproben-Archivierungsbehältnis (30) lösbar von der Vorrichtung (11) und austauschbar ausgebildet ist.

40. Vorrichtung (11) zur Entnahme von Proben aus einem fallenden Materialstrom (18), insbesondere zur Verwendung in einer Anlage (10) zur Beförderung und/oder Trennung und/oder Sortierung von Abfallstoffen (16), wie Hausabfällen, z. B. gemäß einem der vorangegangenen Ansprüche, umfassend eine linear verlagerbare Probenaufnahme (20), an die sich auf ihrer von dem Materialstrom (18) abgewandten Seite ein mit der Probenaufnahme (20) verlagerbarer Schlitten (23) anschließt, der mit einer ortsfesten, auf der dem Materialstrom (18) abgewandeten Seite der Probenaufnahme (20) angeordneten Halterungs- und Führungseinrichtung (25a, 25b) für den Schlitten kooperiert.
